# EUROPÄISCHE PATENTANMELDUNG

(11) **EP 4 401 259 A1**
(43) Veröffentlichungstag der Anmeldung: **17.07.2024**
(21) Anmeldenummer: 23151318.5
(22) Anmeldetag: 12.01.2023
(51) Int. Cl.: H02J 3/00, H02J 13/00

(54) **VERFAHREN ZUR STEUERUNG EINES ELEKTRISCHEN ENERGIEVERTEILUNGSNETZES, KONTROLLANORDNUNG UND COMUTERPROGRAMMPRODUKT**

(71) Anmelder: Siemens Aktiengesellschaft, 80333 München (DE)
(72) Erfinder: Merk, Stephan, 80804 München (DE); Metzger, Michael, 85570 Markt Schwaben (DE); Vesper, Ulf, 91325 Adelsdorf (DE)
(74) Vertreter: Siemens Patent Attorneys

(57) **Zusammenfassung**

Gegenstand der vorliegenden Erfindung ist ein Verfahren zur Steuerung eines elektrischen Energieverteilungsnetzes, mit den Schritten:
Bereitstellen eines geographischen Modelldatensatzes (1,2) eines Teilnetzes des elektrischen Energieverteilungsnetzes mittels einer Datenbank, wobei der geographische Modelldatensatz (1,2) stromkreisbasierte Informationen über Leitungen (24) und Betriebsmittel (26) aufweist, und
Erfassen von Messwerten an Messorten mittels Messeinrichtungen im Energieverteilungsnetz, und
Ermitteln einer Statusmeldung, die einem Ereignisort (27) zugeordnet ist, über einen aktuellen Betriebszustand des Energienetzes anhand der Messwerte mittels einer Netzleiteinrichtung, und
Darstellen eines ersten Teils des Modelldatensatzes (1,2), der die Umgebung des Ereignisortes (27) in einem ersten maximalen geographischen Abstand beschreibt, mittels einer Anzeigeeinrichtung, wobei die Statusmeldung dem Ereignisort (27) zugeordnet eingeblendet wird,
dadurch gekennzeichnet, dass
mittels der Anzeigeeinrichtung bei einem Wechsel zu einer geringeren Vergrößerung ein zweiter Teil des Modelldatensatzes (1,2) dargestellt wird, der die Umgebung des Ereignisortes in einem zweiten maximalen geographischen Abstand beschreibt, und dass
mittels einer Kontexteinrichtung anhand des zweiten maximalen geographischen Abstands und eines Typs der Statusmeldung Kontextinformationen ermittelt werden, und dass
mittels der Anzeigeeinrichtung die Kontextinformationen dargestellt werden.

Ferner sind Gegenstände der vorliegenden Erfindung eine entsprechende Kontrollanordnung und ein Computerprogrammprodukt.

Ferner sind Gegenstände der vorliegenden Erfindung eine entsprechende Kontrollanordnung sowie ein Computerprogrammprodukt.

## Beschreibung

Die Erfindung betrifft ein Verfahren zur Steuerung eines elektrischen Energieverteilungsnetzes, eine Kontrollanordnung gemäß dem Oberbegriff des Anspruchs 11 und ein Comuterprogrammprodukt gemäß Anspruch 15.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System, also eine Leitstelle, bekannt. SCADA Systeme sind zur Kontrolle und Steuerung von Energienetzen lange bekannt (Wikipedia permananter link:
https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leitstelle übermittelt und dort für das Bedienpersonal auf Bildschirmen dargestellt. Insbesondere werden Alarmnachrichten angezeigt.

Zur Steuerung von Leistungsschaltern und Trennschaltern im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programmable logic controllers" (PLCs) und "inteligent devices" (IEDs) empfangen und verarbeitet, um die Leistungsschalter und die Trennschalter usw. anzusteuern. In der Leitstelle ist bisher häufig ein lokales Rechenzentrum vorgesehen, auf dem die Leitstellensoftware wie z.B. Sprectrum Power läuft. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können. Die Leitstellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden.

Auch eine teilweise oder vollständige Ausbildung der RechnerAnordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden.

Als Begleiterscheinung einer immer weiteren Verbreitung von dezentraler Energieerzeugung, also beispielsweise durch Photovoltaik-Anlagen oder Windkraftanlagen, wird durch die immer zahlreicheren lokalen Energieerzeuger, die in das Nieder- und Mittelspannungsnetz einspeisen, eine Vorhersage eines Systemzustands des Energienetzes erschwert. Auch die Abhängigkeit von Wettereinflüssen steigt, weil z.B. Solarzellen stark von der Bewölkung und Windkraftanlagen von der Windstärke beeinflusst werden. Diese Probleme wirken sind besonders stark auf der Niederspannungsebene und der Mittelspannungsebene aus. Sie wirken auch auf die nächsthöhere Spannungsebene eines Energieübertragungsnetzes der Hochspannungsebene zurück, das hierdurch schwieriger zu steuern und vorherzusagen ist.

Bisher werden in der Regel Last- und Erzeugungsprognosen und/oder Fahrpläne in Verbindung mit einem sog. "Distribution System Power Flow (DSPF)" eingesetzt, um einen zukünftigen Netzzustand abzuschätzen. Dabei verwendet DSPF statische Betriebsmitteldaten, lokale Vorhersagen für einen Energieverbrauch und eine Energieerzeugung sowie dynamische Topologie-Informationen (d.h. welche Leitungen zwischen den einzelnen Komponenten aktuell geschaltet sind), um einen prognostizierten Spannungsbetrag und Spannungswinkel an jedem Netzwerkabschnitt zu berechnen. Ein solcher Ansatz ist beispielsweise aus der Produktbroschüre "Spectrum Power Aktives Netzwerkmanagement", Siemens AG 2016, EMFG-B10104-00, bekannt. Die technischen Grundlagen sind aus den Veröffentlichungen "Real-Time Distribution System State Estimation" von Dzafic et al., 2010 IEEE 978-l-4244-7398-4 und "Real-Time Estimation of Loads in Radial and Unsymmetrical Three-Phase Distribution Networks" von Dzafic et al., 2013 IEE 0885-8950, bekannt.

Derzeit messen Verteilnetzbetreiber im Schnitt ca. 20% der Verteilnetzknoten. Der Rest des Verteilnetzes ist unbeobachtet. Im Niederspannungsbereich werden vermehrt Smart Meter eingesetzt, sie werden jedoch nicht wie die in Leitstellen empfangenen Messwerte in Echtzeit bereitgestellt, sondern treffen mehrere Stunden nach der Messung ein.

Mit der zunehmenden Durchdringung der Stromverteilungsnetze mit Elektromobilität, Stromspeichern und verteilter Erzeugung mittels Photovoltaikanlagen wird die sog. "letzte Meile" des Netzes entscheidend für den Netzbetrieb. Durch die vielen Netzanschlusspunkte und Betriebsmittel in den unteren Spannungsebenen hat es der Netzbetreiber mit einer sehr großen Zahl von Ereignissen und Zustandsinformationen zu tun, die die Grundlage für seine Entscheidungen bilden. Für die Interpretation der Informationen auf einer spezifischen Zoomstufe ist oft der Kontext aus der darüber bzw. darunter liegenden Zoomstufe notwendig.

Hinzu kommt, dass unterschiedliche Darstellungsformen des Stromverteilungsnetzes für die unterschiedlichen Aufgabenstellungen im Verteilnetzbetrieb verwendet werden. Um auf Basis der physikalischen Auslastung des Netzes z.B. Umschaltungen eines Teilnetzes auf eine andere Substation zu planen und durchzuführen, ist eine elektrotechnische Sichtweise in Form von schematischen Netzplänen erforderlich.

Um Störungen im Netz beheben zu können und die Netztechniker vor Ort effizient anweisen zu können, ist dagegen ggf. eine geografische Sichtweise mit Zufahrtsmöglichkeiten etc. notwendig. Der Netztechniker vor Ort im Niederspannungsnetz, der z.B. eine temporäre Baustromversorgung an eine geeignete Station anschließen muss, benötigt z.B. Auskunft über die Verlegung der Kabel und braucht wiederrum eine andere Darstellungsform.

Jede der genannten Datenrepräsentationen enthalten viele zusätzliche, teils dynamische Elemente, die die Entscheidungsfindung erschweren. Das Bedienpersonal wird daher vor enorme kognitive Herausforderungen gestellt, um die unterschiedlichen Datenauswertungen und Darstellungen zueinander in Kontext zu setzen und richtige Entscheidungen zu treffen.

In heutigen Systemen werden die Ereignisse und Systemzustände in Alarmlisten oder auf schematischen, in Form eines sogenannte "Single Line Diagrams" (SDL) (auch schematischer Netzplan genannt) oder geographischen Darstellungen des Netzes dem Bedienpersonal angezeigt. Hierin werden Alarme beispielsweise mittels blinkender Symbole angezeigt.

Für jeden Anwendungsfall wird nun je nach Verfügbarkeit von entsprechenden Lösungen (SCADA, GIS, Asset Management System, Outage Management System,...) eine Darstellungsform verwendet und für jede Netzebene gibt es jeweils ein Diagramm. Das Bedienpersonal muss sich den nicht dargestellten, aber für die Interpretation notwendigen, Kontext dazu denken.

Diese Vorgehensweise in Verbindung mit einem qualitativ hohen Trainingslevel der Operatoren ist für Hoch- und nicht allzu hoch automatisierte Mittelspannungsnetze oft noch ausreichend. Am Beispiel eines Stadtnetzbetreibers einer mitteleuropäischen Großstadt mit ca. 2 Mio. Einwohnern werden so ein Hochspannungsnetz mit z.B. 50 Umspannwerken (110kV/20kV - automatisiert) und das darunter liegende Mittelspannungsnetz (Automatisierungsgrad der 20kV / 0,4kV Transformatorstationen liegt z.B. bei unter 10% bei 12.000 Ortsnetztransformator-Stationen) betrieben. Steigt nun der Automatisierungsgrad stark an, so potenziert sich die Anzahl der Anlagen, die zahlreiche Meldungen, Alarme und Messwerte bereitstellen. Damit wird die Aufgabe für das Bedienpersonal zunehmend komplexer.

Eine weitere schwierige Aufgabe, die Komplexität eines Betriebszustands schnell zu erfassen, besteht für das Bedienpersonal darin, verschiedene Informationen auf verschiedenen Vergrößerungsgraden bzw. Detailansichten des Energieverteilungsnetzes im Überblick zu behalten.

Um Ereignisse wie Ausfälle von Netzteilen und/oder Betriebsmitteln oder auch Überlastungen in Teilnetzen auszuwerten, werden insbesondere bei Verteilnetzen der Mittel- und Niederspannungsebene (am niedrigen Ende einer Netzhierarchie) manuell vom Bedienpersonal die jeweiligen Orte der Ereignisse auf einer schematischen Ansicht vergrößert. Die schematische Ansicht ist dabei i.d.R. eine geographische Karte oder ein Luft- oder Satellitenbild. Es kann sich auch um eine stromkreisbasierte Ansicht handeln, z.B. um ein sog. "Single-line-diagram".

Die den elektrischen Netzen zugrunde liegenden physikalischen Wechselwirkungen führen zu stark verbundenen Systemen. Daher kann die Ursache eines Ereignisses oft nur durch eine Analyse des Kontexts erkannt werden. Der Kontext eines Ereignisses sind z.B. aktuelle elektrische Messwerte und Umweltbedingungen (Wetterbedingungen, Bauarbeiten), die in der Umgebung des Ortes des Ereignisses vorliegen. Bei der Analyse von Ereignissen muss daher vom Ort des Ereignisses in der Darstellung durch die Leitstellensoftware herausgezoomt werden, d.h. ein wird eine geringere Vergrößerung gewählt und mehr Kontext aus der Umgebung angezeigt. Es werden durch das Bedienpersonal bisher verschiedene Analyseansichten mit aktuellen elektrischen Parametern bzw. Messwerten der Umgebung oder mit Wetterdaten (Temperatur, Luftfeuchtigkeit, Windgeschwindigkeit, Niederschlag) aufgerufen. Diese Auswahl von Datenquellen ist aufwändig und erfordert höchste Konzentration, um den Kontext, der sich aus den verschiedenen Daten und Darstellungsarten ergibt, im Kopf zusammenzusetzen und in einer Gesamtschau auszuwerten. Des Weiteren ist dieser manuelle Ansatz vergleichsweise langsam und fehleranfällig.

Ausgehend von bekannten Verfahren zur Steuerung eines elektrischen Energieverteilungsnetzes stellt sich an die Erfindung die Aufgabe, ein Verfahren anzugeben, mit dem vergleichsweise einfach, schnell und zuverlässig der Zustand eines elektrischen Energieverteilnetzes überwacht werden kann.

Die Erfindung löst diese Aufgabe durch ein Verfahren nach Anspruch 1.

Eine Einrichtung im Sinne der Erfindung weist beispielsweise Prozessoren, Datenspeicher und Bildschirme auf. Einrichtungen sind z.B. Computer wie z.B. Server, die Datenprozessorressourcen und Datenspeicherressourcen aufweisen und Daten mit anderen Computern austauschen können. Es kann sich auch um Softwaremodule handeln, die auf einem Computer oder einer Cloud-Infrastruktur ausgeführt werden.

Messeinrichtungen können beispielsweise Spannungsmessgeräte, Strommessgeräte, Phasenmessgeräte bzw. "Phasor measurement units (PMUs)", "Remote Terminal Units" oder Intelligente Stromzähler bzw. "Smart Meter", "Intelligent electronic devices (IEDs)" zur Überwachung von Schaltern und anderen Betriebsmitteln, Steuereinrichtungen z.B. für Intelligente Substations oder Schutzgeräte sein, die an den Messorten eingesetzt werden. Die Datenübertragung der Messdaten kann dabei z.B. nach dem IEC 61850 Protokoll oder nach dem Internet-Protokoll erfolgen. Es können per Powerline-Communication über das Stromnetz, oder per Funk z.B. per LTE (4G) oder per Kabel wie z.B. Ethernet oder Lichtwellenleiter Daten übertragen werden. Die Messeinrichtungen liefern Messwerte, die für eine Zustandsschätzung des aktuellen Betriebszustands ausgewertet werden können. Messwerte sind z.B. elektrische Größen wie Stromstärke, Spannung und Phase. Wenn der aktuelle Betriebszustand, also z.B. eine ermittelte Spannung an einem bestimmten Ortsnetztransformator, als unzulässig erkannt wird (z.B. eine zu hohe Spannung), dann wird eine Alarmmeldung für das Bedienpersonal ausgegeben. Betriebsmittel sind z.B. Smart Meter, Leitungen, Transformationen usw.

Eine Anzeigeeinrichtung weist z.B. einen Bildschirm oder eine einen Projektor mit Leinwand auf. Es sollte i.d.R. bevorzugt ein Bildschirm mit hoher Auflösung, mindestens VGA, bevorzugt HD, noch mehr bevorzugt UHD eingesetzt werden, um auch kleine Details gut erkennbar wiederzugeben.

Statusmeldungen über den anhand aktueller elektrischer Messwerte, die von Messeinrichtungen übermittelt wurden, geschätzten Netzzustand des Energieverteilungsnetzes weisen z.B. Informationen über Spannungen, Ströme und Schaltzustände auf. Insbesondere können die Statusmeldungen Warnmeldungen aufweisen, wenn unzulässige Betriebsparameter durch eine Zustandsschätzung oder durch direkte Messung ermittelt wurden. Die Schaltzustände sind beispielsweise ein offener oder ein geschlossener Zustand einer Schalteinrichtung. Es kann sich auch um eine Stufenstellung eines Transformators handeln.

Ein geographischer Modelldatensatz ist z.B. eine Datei mit einem Datenformat, das eine Beschreibung von Betriebsmitteln wie Transformatoren, Leitungen usw. gestattet. Insbesondere ist die geographische Position, beispielswiese als GPS-Koordinaten, hinterlegt. Stromkreisbasierte Informationen über Leitungen und Betriebsmittel sind z.B. Informationen darüber, welche Leitungen per Schalteinrichtungen verbunden sind und welche Schalterstellung (offen oder geschlossen) diese Schalter aufweisen. Eine Datenbank ist z.B. eine in Software und/oder Hardware ausgebildete Einrichtung zum wiederabrufbaren Ablegen des Modelldatensatzes.

Eine Netzleiteinrichtung ist z.B. ausgebildet, aktuelle Messwerte zu sammeln und auszuwerten, indem z.B. eine Zustandsschätzung ermittelt wird. Diese enthält typischerweise Spannungswerte an allen Knotenpunkten im Energienetz.

Ein maximaler geographischer Abstand beschreibt im Sinne der Erfindung eine größte Ausdehnung bzw. Länge eines Bereichs um den Ereignisort herum, der dargestellt wird. Er beschreibt damit die Vergrößerungsstufe. Beispielsweise kann auf einem rechteckigen Bildschirm als Anzeigeeinrichtung auf einer hohen Vergrößerungsstufe, auf der ein Ereignis betrachtet wird, ein Bereich mit einer bestimmten geometrischen Form gewählt werden, also z.B. ein runder oder rechteckiger oder vieleckiger oder kreisförmiger Ausschnitt. Bei einem Kreis ist der maximale geographische Abstand beispielsweise der Radius. Bei einem Rechteck, in dessen Mittelpunkt der Ereignisort angeordnet wird, ist der maximale geographische Abstand beispielsweise eine Länge einer Linie, die vom Ereignisort diagonal in eine der Ecken läuft.

Die Statusmeldung wird zugeordnet eingeblendet, d.h. sie kann direkt am Ereignisort angezeigt werden. Alternativ kann sie an anderer Stelle angezeigt werden und z.B. mittels eines Pfeils auf den Ereignisort zeigen oder es kann auf andere Weise, z.B. durch eine Beschriftung des Ereignisorts und der Statusmeldung mit einer Kennzeichnung die Zuordnung erkennbar gemacht werden.

Bei einem Wechsel zu einer geringeren Vergrößerung wird ein zweiter Teil des Modelldatensatzes dargestellt.

Die Kontexteinrichtung erstellt z.B. anhand des zweiten maximalen geographischen Abstands und eines Typs der Statusmeldung Kontextinformationen.

Der Hauptunterschied zu bekannten Lösungen besteht darin, dass das System automatisch relevante Kontextinformationen für ein Ereignis anzeigt, sobald der Benutzer aus dem Ereignis herauszoomt. Die angezeigten Kontextinformationen sind abhängig von der Klassifizierung des Ereignisses und von der Zoomstufe. Darüber hinaus können die angezeigten Kontextinformationen auch von Benutzerpräferenzen abhängen oder aus Benutzerauswahlen in früheren Ereignisanalysesitzungen gelernt werden. Diese automatische Anzeige relevanter Kontextinformationen, sobald das Bedienpersonal aus einem Störfall herauszoomt, ermöglicht eine schnellere und effizientere Analyse von Ereignissen in Stromnetzen, deren Anzahl im Rahmen der Transformation von Energiesystemen mit dezentraleren Lasten (z.B. E-Autos, Wärmepumpen) und Produktion (z.B. Photovoltaik) deutlich zunehmen wird.

Neben dem manuellen Verkleinern ist es eine weitere Funktionalität, dass kontextabhängige Visualisierungen aus einer Liste von Ansichten ausgewählt werden können. Es werden nur relevante Ansichten für die spezifische Ereignisklasse bzw. für einen Typ eines Ereignisses angezeigt. Nach Auswahl einer Ansicht wird die Darstellung automatisch verkleinert, einschließlich automatischer Zentrierung. Wie beim manuellen Verkleinern werden die Kontextinformationen automatisch angezeigt.

Im Folgenden finden sind einige Beispiele für solche kontextabhängigen Visualisierungsmappings genannt:
Wenn das ausgewählte tatsächliche oder simulierte Ereignis eine Überlastung von Mittelspannungs-Netzanlagen bzw. Betriebsmitteln wie z.B. einem sekundären Verteiltransformator darstellt und die aktuelle Zoomstufe Mittelspannungs-Einspeisung ist, sollten die angezeigten Kontextinformationen die folgenden sog. "Key Performace Indicators" (KPIs) enthalten:
Anzahl, aggregierte Zeit und Art (vorübergehender, dauerhafter, zulässiger Strom- oder Spannungsverstoß) des Verstoßes gegen zulässige Spannungswerte und/oder zulässige Stromstärkewerte.

Wenn es sich bei dem ausgewählten tatsächlichen oder simulierten Ereignis um einen Ausfall handelt, der auf eine Ortsnetzstation beschränkt ist, und die aktuelle Zoomstufe der betroffene Niederspannungs-Einspeiser ist, sollten die folgenden KPIs enthalten sein:
Zahl der nicht versorgten privaten und gewerblichen Verbraucher, und/oder
Priorität von nicht versorgten Lasten (z. B. hat ein Krankenhaus eine hohe Priorität für Minderungsmaßnahmen).

Eine automatische Anzeige relevanter Kontextinformationen, wenn der Benutzer aus einem ausgewählten tatsächlichen oder simulierten Ereignis herauszoomt, kann z.B. durch einen der folgenden Auslöser beendet oder geändert werden:
- Der Benutzer wählt ein anderes Ereignis aus.
- Der Benutzer beendet explizit die kontextbezogene Verkleinerung durch eine Benutzerinteraktion wie Klicken auf eine Schaltfläche, Aufheben eines Kontrollkästchens, eine Tastenkombination oder mittels einer zusätzlichen Schaltfläche auf dem Mausgerät.
- Auswählen einer anderen vorkonfigurierte Ansicht (siehe oben) aus einer Liste.
- Der Benutzer zoomt erneut hinein und die Kontextinformationen ändern sich auf die entsprechende Zoomstufe.

Diese Beendigungsoptionen sind vom Benutzer konfigurierbar, d.h. ein Benutzer kann konfigurieren, welcher der oben genannten Trigger den automatischen kontextbezogenen Zoom-out beendet.

Wenn der Benutzer einen zuvor analysierten tatsächlichen oder simulierten Vorfall auswählt, wird automatisch die letzte Ansicht angezeigt.

Zusammenfassend umfasst die automatische kontextbezogene Verkleinerung die folgenden Schritte:
- Der Bediener wählt ein tatsächliches oder simuliertes Ereignis entweder in der grafischen Ansicht oder in einer Liste von Ereignissen aus und zoomt auf den Vorfall. Dieses Zoom-In kann auch automatisch erfolgen, nachdem der Benutzer den Vorfall in der grafischen Ansicht oder in der Ereignisliste ausgewählt hat. Das automatische Zoom-In beinhaltet eine automatische Zentrierung des Ereignisortes in der grafischen Ansicht.
- Sobald der Benutzer mit dem Mausrad seines Arbeitsplatzes oder eines anderen Zoomgeräts aus dem ausgewählten tatsächlichen oder simulierten Vorfall herauszoomt, werden automatisch die von der Ereignisklasse und der Zoomstufe abhängigen Kontextinformationen, d.h. die eingangs genannten aggregierten KPIs, angezeigt.

Diese Verkleinerung bzw. dieser "Zoom-out" (mit Darstellung der relevanten Kontextinformationen) kann auch automatisch erfolgen, basierend auf der Ereignisklasse, die der Benutzer aus einer Liste relevanter Ansichten auswählen kann. Nach Auswahl einer Ansicht werden die Systeme automatisch verkleinert, einschließlich automatischer Zentrierung.

In einer bevorzugten Ausführungsform des erfindungsgemäßen Verfahrens werden für die stromkreisbasierten Informationen Informationen über mindestens eines der folgenden Betriebsmittel verwendet: Ortsnetztransformator, regelbarer Ortsnetztransformator, Netzregler, Mittelspannungstransformator, Hochspannungstransformator, Schaltanlage, Smart Meter. Die stromkreisbasierten Informationen sind in den genannten Beispielen also z.B. Messwerte und/oder Betriebsdaten.

In einer bevorzugten Ausführungsform des erfindungsgemäßen Verfahrens wird für die Statusmeldung eine Alarmmeldung über unzulässige Betriebszustände verwendet.

In einer weiteren bevorzugten Ausführungsform des erfindungsgemäßen Verfahrens werden mittels einer Steuereinrichtung anhand der Statusmeldung oder der Alarmmeldung Steuerbefehle für elektrische Betriebsmittel erstellt. Die Steuerbefehle werden dann per Datenkommunikation an steuerbare Betriebsmittel im Energieverteilungsnetz wie z.B. regelbare Transformatoren, Netzregler, Schalteinrichtungen, steuerbare Lasten und steuerbare Erzeuger elektrischer Energie übermittelt. Die Steuerbefehle können automatisiert mittels einer Simulation, ausgehend vom aktuellen Netzzustand, erstellt werden. Auch eine manuelle Erstellung von Steuerbefehlen durch das Bedienpersonal ist möglich.

In einer weiteren bevorzugten Ausführungsform des erfindungsgemäßen Verfahrens wird für den Typ der Statusmeldung einer der folgenden Typen verwendet: Ausfälle von Betriebsmitteln, Ausfälle von Leitungen, Kurzschlüsse, Überlastungen von Leitungen, Überlastungen von Transformatoren, Power Quality unterhalb eines vorher festgelegten Schwellenwertes, Netzspannung außerhalb eines vorher festgelegten Intervalls für die Netzspannung, Netzstromstärke außerhalb eines vorher festgelegten Intervalls für die Netzstromstärke.

In einer weiteren bevorzugten Ausführungsform des erfindungsgemäßen Verfahrens werden der erste und der zweite maximale geographische Abstand anhand eines jeweiligen Netzhierarchielevels unter Berücksichtigung der stromkreisbasierten Informationen bestimmt.

In einer weiteren bevorzugten Ausführungsform des erfindungsgemäßen Verfahrens wird für das jeweilige Netzhierarchielevel eines der folgenden Netzhierarchielevel verwendet: Anschlussleitungen des sekundären Verteilnetzes einer Ortsnetzstation, ein von einem Unterwerktransformator des sekundären Verteilnetzes gespeistes Gebiet, ein von einem Mittelspannungsanschluss gespeistes Gebiet, ein von einem primären Unterwerk gespeistes Gebiet.

Bei den nun folgenden Ausführungsformen kann die Kontextinformation beispielsweise anhand von Messwerten, die für an dem zweiten Teil zugeordneten Messorten ermittelt wurden, bestimmt werden. Alternativ oder zusätzlich können auch Simulationen des Netzes verwendet werden, um die Kontextinformationen zu erstellen.

In einer weiteren bevorzugten Ausführungsform des erfindungsgemäßen Verfahrens wird für die Kontextinformationen ein Durchschnittswert für die elektrische Spannung ermittelt.

In einer weiteren bevorzugten Ausführungsform des erfindungsgemäßen Verfahrens wird für die Kontextinformationen ein Referenzwert für elektrische Größen ermittelt. Beispielsweise können mehrere elektrische Größen wie z.B. Spannung und Stromstärke anhand einer vorher festgelegten Bewertungsvorgabe zusammengefasst werden, um einen sog. "Score" zu erhalten. Dabei können die elektrischen Größen auch unterschiedlich gewichtet werden.

In einer weiteren bevorzugten Ausführungsform des erfindungsgemäßen Verfahrens wird für die Kontextinformationen ein Minimalwert für die elektrische Spannung ermittelt.

In einer weiteren bevorzugten Ausführungsform des erfindungsgemäßen Verfahrens wird für die Kontextinformationen ein Maximalwert für die elektrische Spannung ermittelt.

In einer weiteren bevorzugten Ausführungsform des erfindungsgemäßen Verfahrens wird für die Kontextinformationen eine Standardabweichung für die elektrische Spannung ermittelt.

In einer weiteren bevorzugten Ausführungsform des erfindungsgemäßen Verfahrens wird für die Kontextinformationen eine durchschnittliche Änderungsrate für die elektrische Spannung ermittelt.

In einer weiteren bevorzugten Ausführungsform des erfindungsgemäßen Verfahrens wird für die Kontextinformationen eine durchschnittliche Änderungsrate für den elektrischen Strom ermittelt.

In einer weiteren bevorzugten Ausführungsform des erfindungsgemäßen Verfahrens wird für die Kontextinformationen eine Anzahl von Betriebsmitteln bestimmt, die einen vorher festgelegten Schwellenwert für einen maximal zulässigen Strom überschreiten.

In einer weiteren bevorzugten Ausführungsform des erfindungsgemäßen Verfahrens wird für die Kontextinformationen eine Anzahl von Betriebsmitteln bestimmt, die einen vorher festgelegten Schwellenwert für einen maximal zulässigen Strom unterschreiten.

In einer weiteren bevorzugten Ausführungsform des erfindungsgemäßen Verfahrens wird für die Kontextinformationen eine Anzahl von Betriebsmitteln bestimmt, die einen vorher festgelegten Schwellenwert für eine maximal zulässige Spannung überschreiten.

In einer weiteren bevorzugten Ausführungsform des erfindungsgemäßen Verfahrens wird für die Kontextinformationen eine Anzahl von Betriebsmitteln bestimmt, die einen vorher festgelegten Schwellenwert für eine maximal zulässige Spannung unterschreiten.

In einer weiteren bevorzugten Ausführungsform des erfindungsgemäßen Verfahrens wird für die Kontextinformationen eine harmonische Verzerrung von Spannung und/oder Stromstärke bestimmt, die einen vorher festgelegten Schwellenwert überschreitet.

In einer weiteren bevorzugten Ausführungsform des erfindungsgemäßen Verfahrens wird für die Kontextinformationen eine harmonische Verzerrung von Spannung und/oder Stromstärke bestimmt, die einen vorher festgelegten Schwellenwert unterschreitet.

In einer weiteren bevorzugten Ausführungsform des erfindungsgemäßen Verfahrens werden mittels der Kontexteinrichtung anhand vorheriger Auswahlen der Art der anzuzeigenden Kontextinformationen automatisiert anzuzeigende Kontextinformationen erzeugt.

In einer bevorzugten Ausführungsform des erfindungsgemäßen Verfahrens wird für das elektrische Energieverteilungsnetz ein Mittelspannungsnetz mit einer Nennspannung von 1 kV bis 52 kV verwendet.

In einer weiteren bevorzugten Ausführungsform des erfindungsgemäßen Verfahrens wird für das elektrische Energieverteilungsnetz ein Niederspannungsnetz mit einer Nennspannung von höchstens 1 kV verwendet wird. Auch für Niederspannungsnetze können mittlerweile ausreichend genaue Topologieinformationen bereitgestellt werden.

Ausgehend von bekannten Kontrollanordnungen zur Steuerung eines elektrischen Energieverteilungsnetzes stellt sich ferner an die Erfindung die Aufgabe, eine Kontrollanordnung anzugeben, mit der vergleichsweise einfach, schnell und zuverlässig der Zustand eines elektrischen Energieverteilnetzes überwacht werden kann.

Die Erfindung löst diese Aufgabe durch eine Kontrollanordnung nach Anspruch 11. Bevorzugte Ausführungsformen sind in den Ansprüchen 12 bis 14 beschrieben. Es ergeben sich sinngemäß die gleichen Vorteile wie eingangs für das erfindungsgemäße Verfahren erläutert.

Ausgehend von bekannten Computerprogrammprodukten für eine Zustandsschätzung stellt sich ferner an die Erfindung die Aufgabe, ein Computerprogrammprodukt anzugeben, mit dem vergleichsweise einfach, schnell und zuverlässig der Zustand eines elektrischen Energieverteilnetzes überwacht werden kann.

Die Erfindung löst diese Aufgabe durch ein Computerprogrammprodukt nach Anspruch 15. Es ergeben sich sinngemäß die gleichen Vorteile wie eingangs für das erfindungsgemäße Verfahren erläutert.

Zur besseren Erläuterung der Erfindung zeigen in schematischer Darstellung die
- Figur 1: einen geographischen Modelldatensatz auf einer ersten Vergrößerungsstufe, und
- Figur 2: einen geographischen Modelldatensatz auf einer zweiten Vergrößerungsstufe, und
- Figur 3: eine erste Ansicht eines geographischen Modelldatensatzes auf einer zweiten Vergrößerungsstufe, und
- Figur 4: eines zweite Ansicht des Modelldatensatzes aus Figur 3 auf der zweiten Vergrößerungsstufe.

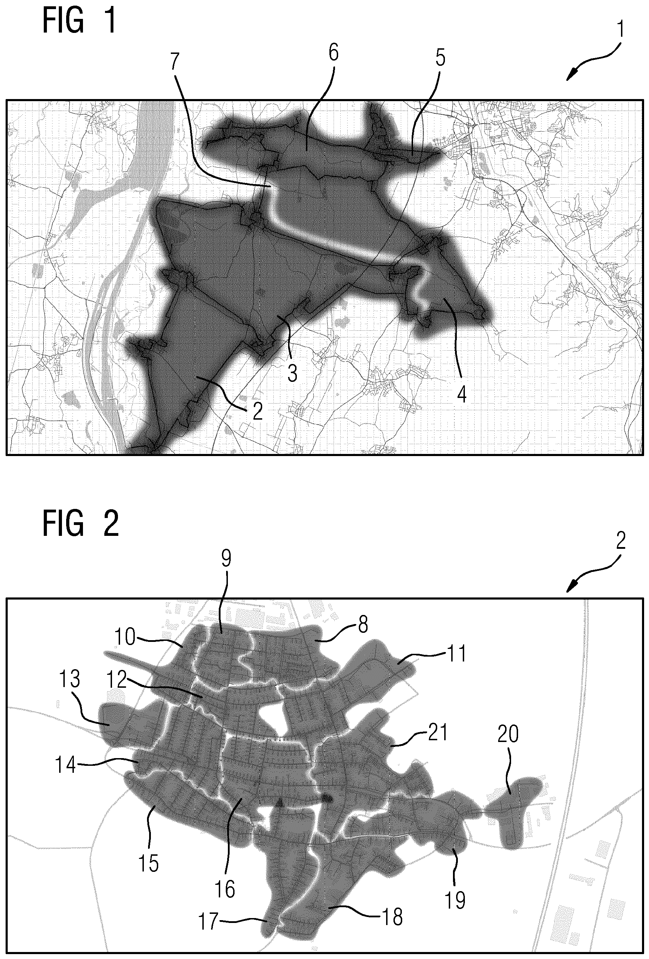

Figur 1 zeigt ein Beispiel für einen geographischen Modelldatensatz 1, der mit einer geringen Vergrößerung angezeigt wird. Der Modelldatensatz wird einerseits im Hintergrund als Karte bzw. Satellitenbild angezeigt, um eine leichte Orientierung für einen menschlichen Betrachter zu ermöglichen. Im Vordergrund sind sechs Mittelspannungsnetze 2-7 abgebildet.

Figur 2 zeigt ein Beispiel mit größerer Vergrößerung. Es ist eine schematische Karte als Hintergrund im Modelldatensatz 2 hinterlegt. Im Vordergrund sind mehrere Niederspannungsnetze 8-21 abgebildet.

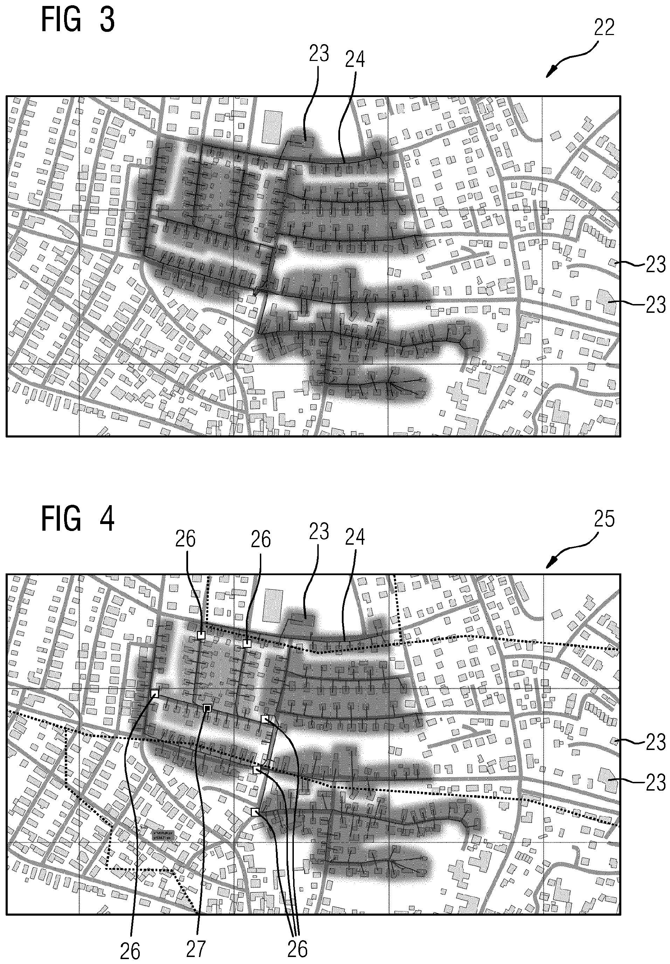

Figur 3 zeigt ein Beispiel mit größerer Vergrößerung. Es ist eine schematische Siedlungskarte mit Gebäuden 23 als Hintergrund im Modelldatensatz hinterlegt. Im Vordergrund sind mehrere Niederspannungsnetzestränge 24 abgebildet.

Figur 4 zeigt ein Beispiel mit größerer Vergrößerung. Es ist die schematische Siedlungskarte mit Gebäuden 23 aus Figur 3 als Hintergrund im Modelldatensatz hinterlegt. Im Vordergrund sind die Niederspannungsnetzstränge 24 abgebildet, wobei nun auch kontextabhängig in Bezug auf ein Ereignis mit Ereignisort 27 und einen erkannten Ereignistyp Schaltanlagen 26 eingeblendet sind.

## Patentansprüche

1. Verfahren zur Steuerung eines elektrischen Energieverteilungsnetzes, mit den Schritten:
Bereitstellen eines geographischen Modelldatensatzes (1,2) eines Teilnetzes des elektrischen Energieverteilungsnetzes mittels einer Datenbank, wobei der geographische Modelldatensatz (1,2) stromkreisbasierte Informationen über Leitungen (24) und Betriebsmittel (26) aufweist, und
Erfassen von Messwerten an Messorten mittels Messeinrichtungen im Energieverteilungsnetz, und
Ermitteln einer Statusmeldung, die einem Ereignisort (27) zugeordnet ist, über einen aktuellen Betriebszustand des Energienetzes anhand der Messwerte mittels einer Netzleiteinrichtung, und
Darstellen eines ersten Teils des Modelldatensatzes (1,2), der die Umgebung des Ereignisortes (27) in einem ersten maximalen geographischen Abstand beschreibt, mittels einer Anzeigeeinrichtung, wobei die Statusmeldung dem Ereignisort (27) zugeordnet eingeblendet wird,
**dadurch gekennzeichnet, dass**
mittels der Anzeigeeinrichtung bei einem Wechsel zu einer geringeren Vergrößerung ein zweiter Teil des
Modelldatensatzes (1,2) dargestellt wird, der die Umgebung des Ereignisortes in einem zweiten maximalen geographischen Abstand beschreibt, und dass
mittels einer Kontexteinrichtung anhand des zweiten maximalen geographischen Abstands und eines Typs der Statusmeldung Kontextinformationen ermittelt werden, und dass mittels der Anzeigeeinrichtung die Kontextinformationen dargestellt werden.

2. Verfahren nach Anspruch 1, **dadurch gekennzeichnet, dass** für die Statusmeldung eine Alarmmeldung über unzulässige Betriebszustände verwendet wird.

3. Verfahren nach Anspruch 1 oder 2, **dadurch gekennzeichnet, dass** für den Typ der Statusmeldung einer der folgenden Typen verwendet wird: Ausfälle von Betriebsmitteln, Ausfälle von Leitungen, Kurzschlüsse, Überlastungen von Leitungen, Überlastungen von Transformatoren, Power Quality unterhalb eines vorher festgelegten Schwellenwertes, Netzspannung außerhalb eines vorher festgelegten Intervalls für die Netzspannung, Netzstromstärke außerhalb eines vorher festgelegten Intervalls für die Netzstromstärke.

4. Verfahren nach einem der vorhergehenden Ansprüche, **dadurch gekennzeichnet, dass** der erste und der zweite maximale geographische Abstand anhand eines jeweiligen Netzhierarchielevels unter Berücksichtigung der stromkreisbasierten Informationen bestimmt werden.

5. Verfahren nach Anspruch 4, **dadurch gekennzeichnet, dass** für das jeweilige Netzhierarchielevel eines der folgenden Netzhierarchielevel verwendet wird: Anschlussleitungen des sekundären Verteilnetzes eines Unterwerks, ein von einem Unterwerktransformator des sekundären Verteilnetzes gespeistes Gebiet, ein von einem Mittelspannungsanschluss gespeistes Gebiet, ein von einem primären Unterwerk gespeistes Gebiet.

6. Verfahren nach einem der vorhergehenden Ansprüche, **dadurch gekennzeichnet, dass** für die Kontextinformationen ein Durchschnittswert für die elektrische Spannung ermittelt wird.

7. Verfahren nach einem der vorhergehenden Ansprüche, **dadurch gekennzeichnet, dass** für die Kontextinformationen eine durchschnittliche Änderungsrate für die elektrische Spannung ermittelt wird.

8. Verfahren nach einem der vorhergehenden Ansprüche, **dadurch gekennzeichnet, dass** für die Kontextinformationen eine Anzahl von Betriebsmitteln bestimmt wird, die einen vorher festgelegten Schwellenwert für einen maximal zulässigen Strom überschreiten.

9. Verfahren nach einem der vorhergehenden Ansprüche, **dadurch gekennzeichnet, dass** für die Kontextinformationen eine harmonische Verzerrung von Spannung und/oder Stromstärke bestimmt wird, die einen vorher festgelegten Schwellenwert überschreitet.

10. Verfahren nach einem der vorhergehenden Ansprüche, **dadurch gekennzeichnet, dass** mittels der Kontexteinrichtung anhand vorheriger Auswahlen der Art der anzuzeigenden Kontextinformationen automatisiert anzuzeigende Kontextinformationen erzeugt werden.

11. Kontrollanordnung zur Steuerung eines elektrischen Energieverteilungsnetzes, aufweisend
eine Datenbank, die ausgebildet ist, einen geographischen Modelldatensatz (1,2) eines Teilnetzes des elektrischen Energieverteilungsnetzes bereitzustellen, wobei der geographische Modelldatensatz (1,2) stromkreisbasierte Informationen über Leitungen (24) und Betriebsmittel (26) aufweist, und
Messeinrichtungen, die ausgebildet sind, Messwerte an Messorten im Energieverteilungsnetz zu erfassen, und
eine Netzleiteinrichtung, die ausgebildet ist, eine Statusmeldung, die einem Ereignisort (27) zugeordnet ist, über einen aktuellen Betriebszustand des Energienetzes anhand der Messwerte zu ermitteln, und
eine Anzeigeeinrichtung, die ausgebildet ist, einen ersten Teil des Modelldatensatzes darzustellen, der die Umgebung des Ereignisortes (27) in einem ersten maximalen geographischen Abstand beschreibt, wobei die Statusmeldung dem Ereignisort zugeordnet eingeblendet wird,
**dadurch gekennzeichnet, dass**
die Anzeigeeinrichtung ausgebildet ist, bei einem Wechsel zu einer geringeren Vergrößerung einen zweiten Teil des Modelldatensatzes darzustellen, der die Umgebung des Ereignisortes (27) in einem zweiten maximalen geographischen Abstand beschreibt, und dass
eine Kontexteinrichtung ausgebildet ist, anhand des zweiten maximalen geographischen Abstands und eines Typs der Statusmeldung Kontextinformationen zu ermitteln, und dass die Anzeigeeinrichtung ausgebildet ist, die Kontextinformationen darzustellen.

12. Kontrollanordnung nach Anspruch 11, **dadurch gekennzeichnet, dass** die Kontexteinrichtung ausgebildet ist, für die Kontextinformationen einen Durchschnittswert für die elektrische Spannung zu ermitteln.

13. Kontrollanordnung nach einem der Ansprüche 11 oder 12, **dadurch gekennzeichnet, dass** die Kontexteinrichtung ausgebildet ist, für die Kontextinformationen eine durchschnittliche Änderungsrate für die elektrische Spannung zu ermitteln.

14. Kontrollanordnung nach einem der Ansprüche 11 bis 13, **dadurch gekennzeichnet, dass** die Kontexteinrichtung ausgebildet ist, für die Kontextinformationen eine Anzahl von Betriebsmitteln zu bestimmen, die einen vorher festgelegten Schwellenwert für einen maximal zulässigen Strom überschreiten.

15. Comuterprogrammprodukt, umfassend Befehle, die bei der Ausführung des Programms durch einen Computer diesen veranlassen, das Verfahren nach einem der Ansprüche 1 bis 10 auszuführen.
